# EUROPEAN PATENT SPECIFICATION

(11) **EP 3 784 629 B1**
(45) Date of publication and mention of the grant of the patent: **11.06.2025**
(21) Application number: 19721358.0
(22) Date of filing: 26.04.2019
(51) Int. Cl.: C03C 17/00, C03C 17/30

(54) **COATED SUBSTRATE AND PROCESS OF PREPARATION**
BESCHICHTETES SUBSTRAT UND VERFAHREN ZU SEINER HERSTELLUNG
SUBSTRAT REVÊTU ET PROCÉDÉ DE PRÉPARATION

(30) Priority: 27.04.2018 GB 201806935
(43) Date of publication of application: 03.03.2021
(73) Proprietor: Pilkington Group Limited, Ormskirk, Lancashire L40 5UF (GB)
(72) Inventor: RAISBECK, Deborah, Burscough, Lancashire L40 5SF (GB); VARMA, Karikath Sukumar, Southport, Merseyside PR8 2BE (GB); MADIN, Claire, Manchester WN4 0SD (GB); BROWN, Jack, Liverpool Merseyside L17 8UJ (GB)
(74) Representative: Marsh, Andrew James
(86) International application number: PCT/GB2019/051166
(87) International publication number: WO 2019/207315

(56) References cited:
- EP-A1- 2 674 403
- US-A- 4 053 076
- US-A1- 2013 071 669
- US-A1- 2014 363 683
- US-A1- 2016 362 332
- DATABASE WPI Week 201666, Derwent World Patents Index; AN 2016-57858X, XP002792915

## Description

This invention relates to a coated glass substrate and a process for preparing a coated glass substrate.

The detrimental effects of UV radiation are a problem in, for example, the brewing industry where beer becomes 'light-struck' upon exposure of a substantially transparent or transparent bottle to sunlight or fluorescent lighting. The radiation can degrade isohumulones - organic molecules present in the beer which are derived from hops - and the photo degradation products combine with sulphur to yield obnoxious compounds, particularly 3-methyl-2-butene-1-thiol (3MBT). Even in very small quantities (parts per trillion), these sulphur containing compounds can spoil the taste or smell of the beer. This effect is also known as skunking.

This problem has been partially addressed by use of dark coloured bottles, typically green or brown, with varying degrees of success. Brown bottles in particular offer significant blocking of UV radiation but their use brings about other problems, particularly in continuous production processes where, for example, transitions between different glass compositions give rise to lost production, energy and materials.

The manufacture of glass bottles or jars by modern methods is well known (see for example "Glass Making Today"; edited by P. J. Doyle; Portcullis Press, ISBN 0 86108 047 5). Typically, a blank shape is first formed by blowing or pressing a slug or 'gob' of molten glass against the walls of a blank mould. The 'blank' so formed is transferred to a 'blow' mould where the final shape of the article is imparted by blowing against the interior of the latter. Variations on this process may occur but modern production methods typically give rise to a shaped glass container emerging from a mould, the container still bearing significant residual heat from the shaping process.

US 4 053 076 A describes a coating on the external surface of a glass container. US 2013/0299378 A1 describes a process whereby a solution having a composition including a silane, a solvent, a catalyst and water is applied to an exterior surface of a glass container, at a temperature between 40 and 60 °C. The glass container is then heated at a temperature greater than 500 °C to produce Si-O-Si bonds with the exterior surface of the container. The solution may be doped with a UV blocking material.

However it would be desirable to provide a coated glass substrate that both counteracts the negative effects of electromagnetic radiation and has improved durability to humidity.

According to a first aspect of the present invention there is provided a coated glass substrate as set out in claim 1.

The inventors have surprisingly found that the composition of the blocking layer affords the coated glass substrate with improved durability to humidity, exemplified by a reduced tendency for the blocking layer to delaminate.

In the context of the present invention, where a layer is said to be "based on" a particular material or materials, this means that the layer predominantly consists of the corresponding said material or materials, which means typically that it comprises at least about 50 at.% of said material or materials.

In the following discussion of the invention, unless stated to the contrary, the disclosure of alternative values for the upper or lower limit of the permitted range of a parameter, coupled with an indication that one of said values is more highly preferred than the other, is to be construed as an implied statement that each intermediate value of said parameter, lying between the more preferred and the less preferred of said alternatives, is itself preferred to said less preferred value and also to each value lying between said less preferred value and said intermediate value.

Throughout this specification, the term "comprising" or "comprises" means including the component(s) specified but not to the exclusion of the presence of other components. The term "consisting essentially of" or "consists essentially of" means including the components specified but excluding other components except for materials present as impurities, unavoidable materials present as a result of processes used to provide the components, and components added for a purpose other than achieving the technical effect of the invention. Typically, when referring to compositions, a composition consisting essentially of a set of components will comprise less than 5% by weight, typically less than 3% by weight, more typically less than 1% by weight of non-specified components.

The term "consisting of" or "consists of" means including the components specified but excluding other components.

Whenever appropriate, depending upon the context, the use of the term "comprises" or "comprising" may also be taken to include the meaning "consists essentially of" or "consisting essentially of", and also may also be taken to include the meaning "consists of" or "consisting of".

References herein such as "in the range x to y" are meant to include the interpretation "from x to y" and so include the values x and y.

In the context of the present invention a transparent material or a transparent substrate is a material or a substrate that is capable of transmitting visible light so that objects or images situated beyond or behind said material can be distinctly seen through said material or substrate.

In the context of the present invention the "thickness" of a layer is, for any given location at a surface of the layer, represented by the distance through the layer, in the direction of the smallest dimension of the layer, from said location at a surface of the layer to a location at an opposing surface of said layer.

In the context of the present invention a "derivative" is a chemical substance related structurally to another chemical substance and theoretically derivable from it.

In the context of the present invention a "container" is a device suitable for containing, amongst other things, liquids, powders and gels.

When a container is completely filled with e.g. a liquid, only part of its surface is in contact with said liquid. In the context of the present invention, the "inner surface" of the container denotes the part of the surface of the container that is in contact with the liquid when the container is completely filled. By contrast, the remainder of the surface of the container, which is not in contact with the liquid when the container is filled completely, is referred to as the "external surface".

The transparent glass substrate is a glass container. Preferably the glass container is a bottle, vial, tube, canister or jar.

The blocking layer is located on the external surface of the container. In some embodiments the blocking layer may coat the entire external surface of the container. In alternative embodiments the blocking layer may coat part of the external surface of the container. Preferably the blocking layer coats at least 70%, more preferably at least 80%, even more preferably at least 90%, most preferably at least 95% of the external surface of the container.

The glass container preferably comprises a closed base located at a first end of the glass container. Preferably the glass container further comprises a body extending from the closed base and being circumferentially closed. Preferably the glass container further comprises an open mouth (commonly called "the finish"). Preferably the open mouth is located at a second end of the glass container. Said second end of the glass container is preferably an end that is opposite (i.e. farthest from) said first end of the glass container. Preferably the body extends axially from the base.

Preferably the glass container further comprises a neck that extends from the body and terminates at the open mouth. Preferably the neck extends axially from the body. Preferably the neck is generally conical in shape.

Preferably the blocking layer does not coat the open mouth. This arrangement reduces the likelihood of issues arising from filling the glass container with a substance which then contacts the blocking layer. Preferably the blocking layer coats the entire external surface of the container apart from a region at least 0.5 cm from the open mouth, more preferably at least 1 cm from the open mouth, even more preferably at least 1.5 cm from the open mouth, most preferably at least 2 cm from the open mouth, but preferably at most 4 cm from the open mouth, more preferably at most 3.5 cm from the open mouth, even more preferably at most 3 cm from the open mouth.

Preferably the blocking layer is obtained by a sol-gel process. In the context of the present invention the term "sol-gel process" denotes a process wherein a medium comprising at least one silicon coupling agent (e.g. an alkoxide of formula Si(OR)₄ wherein each R group is an organic group that may be identical or different from one or more of the other R groups) is hydrolysed. As it hydrolyses, the silicon coupling agent is converted into hydroxylated species (e.g. of formula Si(OH)₄) which condense together to form mineral oxide particles by a process which is comparable to a polymerisation of the silicon coupling agent. Typically, those hydrolysis and condensation reactions first yield a sol (a suspension of oxide particles) which gradually becomes concentrated, the particles that are forming occupying an ever larger volume fraction, whereby a gel is obtained; hence the generic expression "sol-gel" given to processes of this type.

Preferably the material having Si-O-Si bonds comprises a material having a crosslinked network of Si-O-Si bonds. Preferably the material having Si-O-Si bonds comprises a material bonded to the transparent glass substrate via Si-O-Si bonds. The Si-O-Si bonds of the material of the blocking layer may be ionic or covalent.

Preferably the material having Si-O-Si bonds further comprises one or more organic functional groups. Preferably said one or more organic functional group each comprises between 1 and 10 carbon atoms, more preferably between 2 and 8 carbon atoms, even more preferably between 3 and 7 carbon atoms. Preferably said one or more organic functional group further comprises at least one alkyl moiety. Preferably said one or more organic functional group further comprises at least one ether moiety. Preferably said one or more organic functional group comprises at least one glycidoxyalkyl group and/or derivatives, more preferably at least one glycidoxypropyl group and/or derivatives.

The blocking layer may comprise a material having one or more silicate ester functional group. Said silicate ester functional group may be obtained via a reaction between i) said polyol and/or diol and ii) a silanol. Said silanol may be derived from a silane or silane coupling agent as defined below.

Said polyol comprises one or more of polyether polyols such as polyoxyalkylene triols e.g. polyoxypropylene triol; glycerol, sorbitol, mannitol, maltitol, lactitol, xylitol, isomalt, erythritol, polyvinyl alcohol; and cyclitols such as bornesitol, conduritol, inositol, ononitol, pinitol, pinpollitol, quebrachitol, quinic acid, shikimic acid, valienol, viscumitol and ciceritol. Preferably said polyol comprises glycerol.

Said diol comprises one or more of ethylene glycol, diethylene glycol, 1,2-ethanediol, propane-1,2-diol, propane-1,3-diol, 2-methyl-2-propyl-1,3-propanediol, neopentyl glycol, 1,4-butanediol, bisphenol A, propylene-1,3-diol, beta propylene glycol, resorcinol, methanediol, cyclohexanediol and 1,5-pentanediol.

Preferably the blocking component is a material that is capable of blocking, preferably absorbing, electromagnetic radiation in the wavelength range 200-500 nm, more preferably 250-500 nm, even more preferably 300-500nm, even more preferably 350-500 nm, most preferably 380-500nm. These preferred wavelength ranges are of interest since they are ranges at which the skunking of beer may occur.

Preferably the blocking component comprises one or more of benzotriazole compounds such as 2-(2'-hydroxy-5'-methylphenyl)benzotriazole and 2-(2'-hydroxy-3',5'-di-t-butylphenyl)benzotriazole; benzophenone compounds such as 2,2',4,4'-tetrahydroxybenzophenone, 2,4-dihydroxybenzophenone, 2-hydroxy-4-methoxybenzophenone, 2-hydroxy-4-octoxybenzophenone, and 5,5'-methylenebis(2-hydroxy-4-methoxybenzophenone); hydroxyphenyltriazine compounds such as 2-(2-hydroxy-4-octoxyphenyl)-4,6-bis(2,4-di-t-butylphenyl)-s-triazine, 2-(2-hydroxy-4-methoxyphenyl)-4,6-diphenyl-s-triazine, and 2-(2-hydroxy-4-propoxy-5-methylphenyl)-4,6-bis(2,4-di-t-butylphenyl)-s-triazine; and cyanoacrylate compounds such as ethyl-α-cyano-β,β-diphenylacrylate and methyl-2-cyano-3-methyl-3-(p-methoxyphenyl)acrylate and derivatives. Alternatively or additionally the blocking component may comprise one or more polymethine compound, imidazoline compound, coumarin compound, naphthalimide compound, perylene compound, azo compound, isoindolinone compound, quinophthalone compound, quinoline compound and derivatives. A preferred blocking component comprises one or more of a benzotriazole compound, a benzophenone compound, a hydroxyphenyltriazine compound, and a cyanoacrylate compound. More preferably the blocking component comprises, preferably consists essentially of, more preferably consists of, a benzophenone compound, even more preferably 2,2',4,4'-tetrahydroxybenzophenone.

Preferably the blocking layer comprises at least 2%wt of the blocking component, more preferably at least 4%wt, even more preferably at least 5%wt, most preferably at least 5.5%wt, but preferably at most 6%wt, more preferably at most 15%wt, even more preferably at most 10%wt, most preferably at most 8%wt. These preferred ranges provide advantages in terms of improved blocking of electromagnetic radiation whilst avoiding the leaching out of excess blocking component. Preferably the blocking component is dispersed and/or trapped within the blocking layer.

The blocking layer may preferably have a physical thickness of at least 1 micrometre, more preferably at least 10 micrometres, even more preferably at least 100 micrometres, most preferably at least 400 micrometres, but preferably at most 1000 micrometres, more preferably at most 700 micrometres, even more preferably at most 600 micrometres, most preferably at most 500 micrometres.

Preferably the coated glass substrate comprises:
a transparent glass substrate coated with
a blocking layer comprising a material having Si-O-Si bonds, a polyol and/or diol and a blocking component,
wherein the blocking component is a material that is capable of blocking electromagnetic radiation in the wavelength range 10-500 nm,
wherein the transparent glass substrate is a glass container,
wherein the blocking layer coats at least 80% of the external surface of the container,
wherein the material having Si-O-Si bonds comprises a material having a crosslinked network of Si-O-Si bonds,
wherein the blocking component is a material that is capable of blocking electromagnetic radiation in the wavelength range 350-500 nm.

According to a second aspect of the present invention there is provided a process for preparing a coated glass substrate in accordance with the first aspect of the present invention,
said process as set out in claim 6.

It has surprisingly been found that this process can be used to apply a coating that can block electromagnetic radiation to a glass substrate that is at a higher temperature than has previously been possible. This enables coating of a glass substrate, e.g. a glass container, shortly after manufacture, without the necessity to cool the glass substrate in order to allow coating. The incumbent processes require the glass substrate to be cooled before coating otherwise the blocking layer is hazy and does not adhere sufficiently to the substrate.

Preferably steps a), b) and c) are carried out in sequence.

Preferably, in step a) the mixing occurs by stirring. Preferably the stirring is carried out for at least 10 min, more preferably at least 20 min, even more preferably at least 30 min, most preferably at least 40 min. Preferably, in step a) following the mixing the solution or mixture is aged (i.e. the solution is allowed to stand). Preferably, in step a) following the mixing the solution or mixture is aged for at least 2 hr, more preferably at least 7 hr, even more preferably at least 10 hr, most preferably at least 12 hr. Aging the solution or mixture is advantageous since it facilitates the formation of Si-O-Si bonds. Preferably the mixing and/or aging is carried out at a temperature of between 1 °C and 30 °C, more preferably between 3 °C and 20 °C, even more preferably between 4 °C and 10 °C.

Preferably, in step b), when the solution or mixture is applied to the surface of the transparent glass substrate, said transparent glass substrate is at a temperature of greater than 60°C, more preferably greater than 80°C, even more preferably greater than 100°C, most preferably greater than 110°C, but preferably less than 200°C, more preferably less than 160°C, even more preferably less than 140°C, most preferably less than 130°C.

Preferably, in step c), the applied solution or mixture is cured for at least 20 min, more preferably at least 40 min, even more preferably at least 50 min, most preferably at least 55 min, but preferably at most 24 hr, more preferably at most 10 hr, even more preferably at most 3 hr, most preferably at most 1.5 hr. These preferred durations enable better formation of the required Si-O-Si bonds, improving durability.

Preferably, in step c), the applied solution or mixture is cured at a temperature of greater than 20°C, more preferably greater than 100°C, even more preferably greater than 160°C, most preferably greater than 190°C, but preferably less than 400°C, more preferably less than 300°C, even more preferably less than 240°C, most preferably less than 210°C. These preferred curing temperatures enable better formation of the required Si-O-Si bonds, improving durability.

It is preferred that the silane is represented by the formula (1):

SiX₄ (1)

wherein X is a hydrolysable functional group or a halogen atom.

The hydrolyzable functional group is, for example, at least one selected from an alkoxy group, an acetoxy group, and an alkenyloxy group. Examples of the alkoxy group include an alkoxy group having 1 to 6, preferably 1 to 4 carbon atoms (such as a methoxy group, an ethoxy group, a propoxy group, and a butoxy group). A preferred hydrolyzable functional group is an alkoxy group. The halogen atom is, for example, chlorine or bromine, and is preferably chlorine. Preferably the silane is a tetraalkoxysilane such as tetraethoxysilane (TEOS). The alkoxy group is preferably an alkoxy group having 1 to 4 carbon atoms.

The solution or mixture prepared in step a) has a molar percentage (mol%) of the silane of at least 1 mol%, preferably at least 2 mol%, more preferably at least 3 mol%, most preferably at least 4 mol%, but at most 10 mol%, preferably at most 8 mol%, most preferably at most 6.5 mol%. The mol% of the silane in the solution or mixture prepared in step a) is defined as: (the number of moles of the silane in the solution or mixture prepared in step a) / the total number of moles in the solution or mixture prepared in step a)) x 100%.

Preferably the solution or mixture prepared in step a) has a weight percentage (wt%) of the silane of at least 5 wt%, more preferably at least 10 wt%, even more preferably at least 15 wt%, most preferably at least 20 wt%, but preferably at most 45 wt%, more preferably at most 40 wt%, even more preferably at most 35 wt%, most preferably at most 30 wt%. The wt% of the silane in the solution or mixture prepared in step a) is defined as: (the mass of the silane in the solution or mixture prepared in step a) / the total mass of the solution or mixture prepared in step a)) x 100%.

Preferably the components mixed in step a) further comprise a silane coupling agent represented by the formula (2):

R¹ₘR²ₙSiX₄₋ₘ₋ₙ (2)

wherein R¹ is an organic group having a reactive functional group, R² is an organic group having no reactive functional group, X is a hydrolysable functional group or a halogen atom, m is an integer of 1 to 3, n is an integer of 0 to 2, and m+n is an integer of 1 to 3.

The reactive functional group is, for example, at least one selected from a vinyl group, an acryloyl group, a methacryloyl group, an isocyanurate group, a ureido group, a mercapto group, a sulfide group, an isocyanate group, an epoxy group, and an amino group. The epoxy group may be a part of a glycidyl group, particularly an oxyglycidyl group. The amino group may be any of a primary amino group, a secondary amino group, and a tertiary amino group. Preferred reactive functional groups are an epoxy group and an amino group, and an epoxy group is particularly preferable. The organic group having a reactive functional group may be, for example, an organic group that acts as a reactive functional group by itself (e.g., a vinyl group) or may be, for example, an aliphatic or aromatic hydrocarbon group in which at least one hydrogen atom is substituted by a reactive functional group. Examples of the aliphatic hydrocarbon group include a linear alkyl group having 1 to 10 carbon atoms and a branched alkyl group having 3 to 10 carbon atoms. Examples of the aromatic hydrocarbon group include a phenyl group.

The organic group having no reactive functional group is, for example, an aliphatic or aromatic hydrocarbon group. Examples of the aliphatic hydrocarbon group include a linear alkyl group having 1 to 10 carbon atoms and a branched alkyl group having 3 to 10 carbon atoms. Examples of the aromatic hydrocarbon include a phenyl group.

Examples of X, the hydrolysable functional group or halogen atom, for formula (2) are the same as the examples set out above in relation to formula (1).

The integer m is preferably 1 or 2, the integer n is preferably 0 or 1, and the integer m+n is preferably 1 or 2.

Examples of the silane coupling agent include vinyltriethoxysilane, p-styryltrimethoxysilane, 3-glycidoxypropyltrimethoxysilane (GPTMS), 3-glycidoxypropylmethyldiethoxysilane, 3-methacryloxypropyltrimethoxysilane, 3-aminopropyltrimethoxysilane, 3-aminopropyltriethoxysilane, N-phenyl-3-aminopropyltrimethoxysilane, tris-(trimethoxysilylpropyl)isocyanurate, 3-ureidopropyltrimethoxysilane, 3-mercaptopropyltrimethoxysilane and derivatives.

Preferably the solution or mixture prepared in step a) has a molar percentage (mol%) of the silane coupling agent of at least 0.5 mol%, more preferably at least 1 mol%, even more preferably at least 1.5 mol%, most preferably at least 1.8 mol%, but preferably at most 10 mol%, more preferably at most 5 mol%, even more preferably at most 3 mol%, most preferably at most 2 mol%. The mol% of the silane coupling agent in the solution or mixture prepared in step a) is defined as: (the number of moles of the silane coupling agent in the solution or mixture prepared in step a) / the total number of moles in the solution or mixture prepared in step a)) x 100%.

Preferably the solution or mixture prepared in step a) has a weight percentage (wt%) of the silane coupling agent of at least 2 wt%, more preferably at least 5 wt%, even more preferably at least 8 wt%, most preferably at least 10 wt%, but preferably at most 25 wt%, more preferably at most 20 wt%, even more preferably at most 15 wt%, most preferably at most 12 wt%. The wt% of the silane coupling agent in the solution or mixture prepared in step a) is defined as: (the mass of the silane coupling agent in the solution or mixture prepared in step a) / the total mass of the solution or mixture prepared in step a)) x 100%.

Examples of the polyol and/or diol and the blocking component are the same as the examples set out above in relation to the first aspect of the present invention.

The solution or mixture prepared in step a) has a molar percentage (mol%) of the polyol and/or diol of at least 2 mol%, preferably at least 4 mol%, more preferably at least 5 mol%, most preferably at least 6 mol%, but preferably at most 20 mol%, more preferably at most 15 mol%, even more preferably at most 10 mol%, most preferably at most 7 mol%. The mol% of the polyol and/or diol in the solution or mixture prepared in step a) is defined as: (the number of moles of the polyol and/or diol in the solution or mixture prepared in step a) / the total number of moles in the solution or mixture prepared in step a)) x 100%.

Preferably the solution or mixture prepared in step a) has a weight percentage (wt%) of the polyol and/or diol of at least 5 wt%, more preferably at least 10 wt%, even more preferably at least 13 wt%, most preferably at least 14 wt%, but preferably at most 30 wt%, more preferably at most 25 wt%, even more preferably at most 20 wt%, most preferably at most 16 wt%. The wt% of the polyol and/or diol in the solution or mixture prepared in step a) is defined as: (the mass of the polyol and/or diol in the solution or mixture prepared in step a) / the total mass of the solution or mixture prepared in step a)) x 100%.

Preferably the solution or mixture prepared in step a) has a molar percentage (mol%) of the blocking component of at least 0.1 mol%, more preferably at least 0.2 mol%, even more preferably at least 0.3 mol%, most preferably at least 0.4 mol%, but preferably at most 2 mol%, more preferably at most 1 mol%, even more preferably at most 0.7 mol%, most preferably at most 0.5 mol%. The mol% of the blocking component in the solution or mixture prepared in step a) is defined as: (the number of moles of the blocking component in the solution or mixture prepared in step a) / the total number of moles in the solution or mixture prepared in step a)) x 100%.

Preferably the solution or mixture prepared in step a) has a weight percentage (wt%) of the blocking component of at least 1 wt%, more preferably at least 1.5 wt%, even more preferably at least 2 wt%, most preferably at least 2.5 wt%, but preferably at most 10 wt%, more preferably at most 5 wt%, even more preferably at most 4 wt%, most preferably at most 3 wt%. The wt% of the blocking component in the solution or mixture prepared in step a) is defined as: (the mass of the blocking component in the solution or mixture prepared in step a) / the total mass of the solution or mixture prepared in step a)) x 100%.

The solution or mixture prepared in step a) has a molar percentage (mol%) of water of at least 50 mol%, preferably at least 60 mol%, more preferably at least 70 mol%, most preferably at least 73 mol%, but preferably at most 90 mol%, more preferably at most 80 mol%, even more preferably at most 77 mol%, most preferably at most 75 mol%. The mol% of water in the solution or mixture prepared in step a) is defined as: (the number of moles of water in the solution or mixture prepared in step a) / the total number of moles in the solution or mixture prepared in step a)) x 100%.

Preferably the solution or mixture prepared in step a) has a weight percentage (wt%) of water of at least 15 wt%, more preferably at least 20 wt%, even more preferably at least 25 wt%, most preferably at least 30 wt%, but preferably at most 50 wt%, more preferably at most 45 wt%, even more preferably at most 40 wt%, most preferably at most 35 wt%. The wt% of water in the solution or mixture prepared in step a) is defined as: (the mass of water in the solution or mixture prepared in step a) / the total mass of the solution or mixture prepared in step a)) x 100%.

Preferably the acid comprises one or more of nitric acid, acetic acid, hydrochloric acid and sulphuric acid. Preferably the acid comprises nitric acid.

Preferably the solution or mixture prepared in step a) has a molar percentage (mol%) of acid of at least 0.1 mol%, more preferably at least 0.2 mol%, even more preferably at least 0.25 mol%, most preferably at least 0.3 mol%, but preferably at most 2 mol%, more preferably at most 1 mol%, even more preferably at most 0.6 mol%, most preferably at most 0.4 mol%. The mol% of acid in the solution or mixture prepared in step a) is defined as: (the number of moles of acid in the solution or mixture prepared in step a) / the total number of moles in the solution or mixture prepared in step a)) x 100%.

Preferably the solution or mixture prepared in step a) has a weight percentage (wt%) of acid of at least 0.1 wt%, more preferably at least 0.3 wt%, even more preferably at least 0.4 wt%, most preferably at least 0.45 wt%, but preferably at most 5 wt%, more preferably at most 1 wt%, even more preferably at most 0.6 wt%, most preferably at most 0.55 wt%. The wt% of acid in the solution or mixture prepared in step a) is defined as: (the mass of acid in the solution or mixture prepared in step a) / the total mass of the solution or mixture prepared in step a)) x 100%.

Preferably the components mixed in step a) further comprise an additional solvent such as one or more of methanol, ethanol, n-propanol, i-propanol, butanol, diethylene glycol, acetone, methylethylketones, triethylene glycols, vinylpyrrolidones, toluene, phenol, benzyl alcohol, dioxane and derivatives. Preferably the additional solvent is an alcohol, more preferably ethanol.

Preferably the solution or mixture prepared in step a) has a molar percentage (mol%) of the additional solvent of at least 5 mol%, more preferably at least 8 mol%, even more preferably at least 10 mol%, most preferably at least 12 mol%, but preferably at most 25 mol%, more preferably at most 20 mol%, even more preferably at most 15 mol%, most preferably at most 13 mol%. The mol% of the additional solvent in the solution or mixture prepared in step a) is defined as: (the number of moles of the additional solvent in the solution or mixture prepared in step a) / the total number of moles in the solution or mixture prepared in step a)) x 100%.

Preferably the solution or mixture prepared in step a) has a weight percentage (wt%) of the additional solvent of at least 5 wt%, more preferably at least 9 wt%, even more preferably at least 12 wt%, most preferably at least 13 wt%, but preferably at most 30 wt%, more preferably at most 22 wt%, even more preferably at most 17 wt%, most preferably at most 15 wt%. The wt% of the additional solvent in the solution or mixture prepared in step a) is defined as: (the mass of the additional solvent in the solution or mixture prepared in step a) / the total mass of the solution or mixture prepared in step a)) x 100%.

Preferably the components mixed in step a) further comprise a surfactant such as a polysiloxane. Preferably the polysiloxane comprises an organically modified polysiloxane, more preferably one or more of a polyether modified polysiloxane and a polymethylalkylsiloxane.

Preferably the solution or mixture prepared in step a) has a weight percentage (wt%) of the surfactant of at least 0.1 wt%, more preferably at least 0.5 wt%, even more preferably at least 0.6 wt%, most preferably at least 0.7 wt%, but preferably at most 5 wt%, more preferably at most 3 wt%, even more preferably at most 2 wt%, most preferably at most 1 wt%. The wt% of the surfactant in the solution or mixture prepared in step a) is defined as: (the mass of the surfactant in the solution or mixture prepared in step a) / the total mass of the solution or mixture prepared in step a)) x 100%.

In step b) the solution or mixture is preferably applied to the surface of the transparent glass substrate by spraying, flow coating, roller coating or a slot die, most preferably by spraying. Preferably the spraying is carried out using at least two nozzles. Preferably said nozzles are directed towards opposing sides of the transparent glass substrate.

Preferably, wherein in step a) following the mixing the solution or mixture is aged (i.e. the solution or mixture is allowed to stand) for at least 2 hr;
wherein in step b), when the solution or mixture is applied to the surface of the transparent glass substrate, said transparent glass substrate is at a temperature of greater than 60°C;
wherein the silane is a tetraalkoxysilane;
wherein the components mixed in step a) further comprise a silane coupling agent represented by the formula (2):

   R¹ₘR²ₙSiX₄₋ₘ₋ₙ (2)
wherein R¹ is an organic group having a reactive functional group, R² is an organic group having no reactive functional group, X is a hydrolysable functional group or a halogen atom, m is an integer of 1 to 3, n is an integer of 0 to 2, and m+n is an integer of 1 to 3;
wherein the blocking component comprises one or more of a benzotriazole compound, a benzophenone compound, a hydroxyphenyltriazine compound, and a cyanoacrylate compound; and
wherein the solution or mixture prepared in step a) has a molar percentage (mol%) of the polyol and/or diol, preferably glycerol, of at least 4 mol%, preferably at least 6 mol%.

Preferably, in the embodiment of the preceding paragraph, the components mixed in step a) further comprise an additional solvent, more preferably an alcohol.

According to a third aspect of the present invention there is provided the use of a polyol and/or diol as set out in claim 15.

The invention will now be further described by way of the following specific embodiments, which are given by way of illustration and not of limitation, with reference to the accompanying drawing in which:

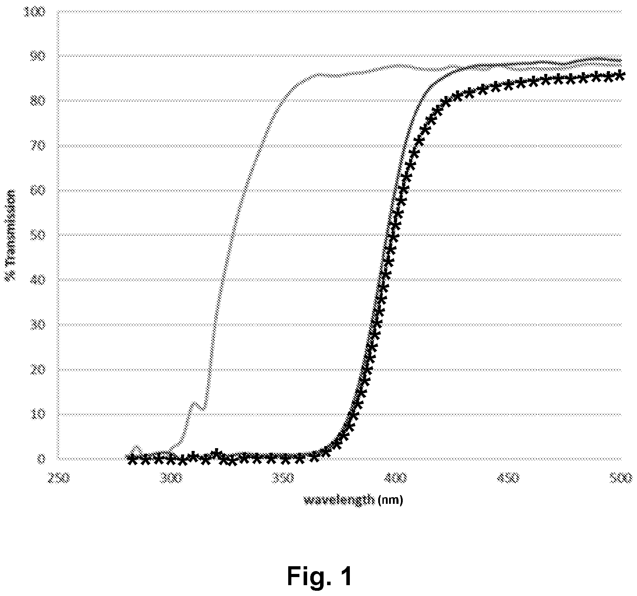

**Fig. 1** is a graph of percentage transmission vs wavelength for an uncoated colourless bottle (light grey curve), a coated bottle outside the scope of the present invention (dark grey curve) and a coated bottle according to the present invention (asterisked curve).

### Examples

Uvinul ^{™} 3050 was obtained from Sigma-Aldrich ^{™}. BYK ^{™} -345 was obtained from BYK ^{™}. The GPTMS was obtained from Sigma-Aldrich. The TEOS was obtained from Sigma-Aldrich.

### Comparative Example 1

A solution/mixture was prepared by stirring the components shown below in Table 1 for 35 min.

**Table 1 showing the mass of each component used for the solution prepared in Comparative Example 1**

| | | | | | | |
|---|---|---|---|---|---|---|
| **Uvinul** ^{™} **3050 (g)** | **Ethanol (g)** | **BYK ^{™} -345 (5% Ethanol) (g)** | **GPTMS (g)** | **TEOS (g)** | **Conc. HNO₃ (5% Ethanol) (g)** | **Water (g)** |
| 2.5 | 28.9 | 0.8 | 11.3 | 22.6 | 0.5 | 33.4 |

Following stirring, the solution/mixture was aged by allowing it to stand for 12 hr at 5°C. A clear (flint) bottle at a temperature of 20°C was then spray coated with the solution/mixture. The spray coating was carried out using two nozzles, PTFE tubing and syringe drivers. The applied solution/mixture was then cured at 200°C for 1 hr.

The light transmission characteristics of the resultant coated bottle were tested using a PerkinElmer ^{™} Lambda 900 spectrometer. The results are shown in Figure 1 and discussed below.

### Example 1

A solution/mixture was prepared using the components shown below in Table 2 and the same approach as Comparative Example 1.

**Table 2 showing the mass of each component used for the solution prepared in Example 1**

| **Uvinul ^{™} 3050 (g)** | **Ethanol (g)** | **Glycerol (g)** | **BYK ^{™} -345 (5% Ethanol) (g)** | **GPTMS (g)** | **TEOS (g)** | **Conc. HNO₃ (5% Ethanol) (g)** | **Water (g)** |
|---|---|---|---|---|---|---|---|
| 2.5 | 13.9 | 15 | 0.8 | 11.3 | 22.6 | 0.5 | 33.4 |

Following stirring, the solution/mixture was aged by allowing it to stand for 12 hr at 5°C. A clear (flint) bottle at a temperature of 120°C was then spray coated with the solution/mixture using the same approach as Comparative Example 1. The applied solution/mixture was then cured at 200°C for 1 hr.

The light transmission characteristics of the resultant coated bottle were tested as in Comparative Example 1. The results are shown in Figure 1 and discussed below.

### Results

### UV Blocking Capability

Fig. 1 shows a graph of percentage transmission vs wavelength for an uncoated colourless bottle (light grey curve), the coated bottle prepared in Comparative Example 1 (dark grey curve) and the coated bottle prepared in Example 1 (asterisked curve). As will be noted, both the bottles of Comparative Example 1 and of Example 1 exhibit UV blocking capability in comparison with an uncoated colourless bottle. Indeed, the bottle of Example 1 performs slightly better than the bottle of Comparative Example 1 in this regard.

### Durability to Humidity

Two clear (flint) bottles were coated: one according to Comparative Example 1 and one according to Example 1. A sample with dimensions of approximately 4 cm x 3 cm and a thickness the same as the thickness of the bottle was cut from the body of each bottle.

These samples were assessed via humidity testing to investigate their resistance to harsh environments. The machine used was a Thermotron ^{™} 7800 Environmental Chamber and the conditions were 95% humidity and 50 °C. The samples were checked after 24 hours and after 48 hours.

### After 24 Hours:

Comparative Example 1 Sample - coating delamination had occurred. Patchy coating remaining on sample.
Example 1 Sample - coating had no clear defects visually, and no signs of delamination.

### After 48 hours:

Comparative Example 1 Sample - further delamination of coating with less coverage of coating apparent.
Example 1 Sample - coating had no clear defects visually, and no signs of delamination.

These results clearly demonstrate the improved durability to humidity of the coated glass substrates of the present invention.

## Claims

1. A coated glass substrate comprising:
a transparent glass substrate coated with
a blocking layer comprising a material having Si-O-Si bonds, a polyol and/or diol and a blocking component,
wherein the blocking component is a material that is capable of blocking electromagnetic radiation in the wavelength range 10-500 nm,
wherein the transparent glass substrate is a glass container and wherein the blocking layer is located on the external surface of the container,
wherein said polyol comprises one or more of polyether polyols such as polyoxyalkylene triols e.g. polyoxypropylene triol; glycerol, sorbitol, mannitol, maltitol, lactitol, xylitol, isomalt, erythritol, polyvinyl alcohol; and cyclitols such as bornesitol, conduritol, inositol, ononitol, pinitol, pinpollitol, quebrachitol, quinic acid, shikimic acid, valienol, viscumitol and ciceritol,
wherein said diol comprises one or more of ethylene glycol, diethylene glycol, 1,2-ethanediol, propane-1,2-diol, propane-1,3-diol, 2-methyl-2-propyl-1,3-propanediol, neopentyl glycol, 1,4-butanediol, bisphenol A, propylene-1,3-diol, beta propylene glycol, resorcinol, methanediol, cyclohexanediol and 1,5-pentanediol.

2. The coated glass substrate according to claim 1, wherein the material having Si-O-Si bonds comprises a material having a crosslinked network of Si-O-Si bonds, preferably wherein the material having Si-O-Si bonds further comprises one or more organic functional groups.

3. The coated glass substrate according to any preceding claim, wherein the blocking component is a material that is capable of blocking electromagnetic radiation in the wavelength range 200-500 nm, preferably 250-500 nm, more preferably 300-500nm, even more preferably 350-500 nm, most preferably 380-500nm.

4. The coated glass substrate according to any preceding claim, wherein the blocking component comprises one or more of a benzotriazole compound, a benzophenone compound, a hydroxyphenyltriazine compound, and a cyanoacrylate compound.

5. The coated glass substrate according to any preceding claim, wherein the coated glass substrate comprises:
a transparent glass substrate coated with
a blocking layer comprising a material having Si-O-Si bonds, a polyol and/or diol and a blocking component,
wherein the blocking component is a material that is capable of blocking electromagnetic radiation in the wavelength range 10-500 nm,
wherein the transparent glass substrate is a glass container,
wherein the blocking layer coats at least 80% of the external surface of the container,
wherein the material having Si-O-Si bonds comprises a material having a crosslinked network of Si-O-Si bonds,
wherein the blocking component is a material that is capable of blocking electromagnetic radiation in the wavelength range 350-500 nm.

6. A process for preparing a coated glass substrate in accordance with any preceding claim, said process comprising the following steps:
a) preparing a solution or mixture by mixing at least the following components: a silane, a polyol and/or diol, a blocking component, water and an acid;
b) applying said solution or mixture to a surface of a transparent glass substrate; and
c) curing the applied solution or mixture,
wherein said polyol comprises one or more of polyether polyols such as polyoxyalkylene triols e.g. polyoxypropylene triol; glycerol, sorbitol, mannitol, maltitol, lactitol, xylitol, isomalt, erythritol, polyvinyl alcohol; and cyclitols such as bornesitol, conduritol, inositol, ononitol, pinitol, pinpollitol, quebrachitol, quinic acid, shikimic acid, valienol, viscumitol and ciceritol,
wherein said diol comprises one or more of ethylene glycol, diethylene glycol, 1,2-ethanediol, propane-1,2-diol, propane-1,3-diol, 2-methyl-2-propyl-1,3-propanediol, neopentyl glycol, 1,4-butanediol, bisphenol A, propylene-1,3-diol, beta propylene glycol, resorcinol, methanediol, cyclohexanediol and 1,5-pentanediol,
wherein the solution or mixture prepared in step a) has a molar percentage (mol%) of the polyol and/or diol of at least 2 mol%,
wherein the solution or mixture prepared in step a) has a molar percentage (mol%) of the silane of at least 1 mol%, but at most 10 mol%, and
wherein the solution or mixture prepared in step a) has a molar percentage (mol%) of water of at least 50 mol%.

7. The process according to claim 6, wherein, in step a) following the mixing the solution or mixture is aged for at least 2 hr, more preferably at least 7 hr, even more preferably at least 10 hr, most preferably at least 12 hr.

8. The process according to claim 6 or claim 7, wherein, in step b), when the solution or mixture is applied to the surface of the transparent glass substrate, said transparent glass substrate is at a temperature of greater than 60°C, preferably greater than 80°C, more preferably greater than 100°C, most preferably greater than 110°C, but preferably less than 200°C, more preferably less than 160°C, even more preferably less than 140°C, most preferably less than 130°C.

9. The process according to any of claims 6 to 8, wherein, in step c), the applied solution or mixture is cured for at least 20 min, preferably at least 40 min, more preferably at least 50 min, most preferably at least 55 min, but preferably at most 24 hr, more preferably at most 10 hr, even more preferably at most 3 hr, most preferably at most 1.5 hr.

10. The process according to any of claims 6 to 9, wherein, in step c), the applied solution or mixture is cured at a temperature of greater than 20°C, preferably greater than 100°C, more preferably greater than 160°C, most preferably greater than 190°C, but preferably less than 400°C, more preferably less than 300°C, even more preferably less than 240°C, most preferably less than 210°C.

11. The process according to any of claims 6 to 10, wherein the silane is represented by the formula (1):
SiX₄ (1)
wherein X is a hydrolysable functional group or a halogen atom, and/or wherein the silane is a tetraalkoxysilane such as tetraethoxysilane (TEOS).

12. The process according to any of claims 6 to 11, wherein the components mixed in step a) further comprise a silane coupling agent represented by the formula (2):
R¹ₘR²ₙSiX₄₋ₘ₋ₙ (2)
wherein R¹ is an organic group having a reactive functional group, R² is an organic group having no reactive functional group, X is a hydrolysable functional group or a halogen atom, m is an integer of 1 to 3, n is an integer of 0 to 2, and m+n is an integer of 1 to 3, optionally wherein the silane coupling agent comprises one or more of vinyltriethoxysilane, p-styryltrimethoxysilane, 3-glycidoxypropyltrimethoxysilane (GPTMS), 3-glycidoxypropylmethyldiethoxysilane, 3-methacryloxypropyltrimethoxysilane, 3-aminopropyltrimethoxysilane, 3-aminopropyltriethoxysilane, N-phenyl-3-aminopropyltrimethoxysilane, tris-(trimethoxysilylpropyl)isocyanurate, 3-ureidopropyltrimethoxysilane, 3-mercaptopropyltrimethoxysilane and derivatives.

13. The process according to any of claims 6 to 12, wherein the solution or mixture prepared in step a) has a molar percentage (mol%) of the polyol and/or diol of at least 4 mol%, more preferably at least 5 mol%, most preferably at least 6 mol%, but preferably at most 20 mol%, more preferably at most 15 mol%, even more preferably at most 10 mol%, most preferably at most 7 mol%.

14. The process according to any of claims 6 to 13, wherein in step a) following the mixing the solution or mixture is aged for at least 2 hr;
wherein in step b), when the solution or mixture is applied to the surface of the transparent glass substrate, said transparent glass substrate is at a temperature of greater than 60°C;
wherein the silane is a tetraalkoxysilane;
wherein the components mixed in step a) further comprise a silane coupling agent represented by the formula (2):
R¹ₘR²ₙSiX₄₋ₘ₋ₙ (2)
wherein R¹ is an organic group having a reactive functional group, R² is an organic group having no reactive functional group, X is a hydrolysable functional group or a halogen atom, m is an integer of 1 to 3, n is an integer of 0 to 2, and m+n is an integer of 1 to 3;
wherein the blocking component comprises one or more of a benzotriazole compound, a benzophenone compound, a hydroxyphenyltriazine compound, and a cyanoacrylate compound; and
wherein the solution or mixture prepared in step a) has a molar percentage (mol%) of the polyol and/or diol, preferably glycerol, of at least 4 mol%, preferably at least 6 mol%.

15. Use of a polyol and/or diol to improve the durability to humidity of a coated glass substrate comprising a transparent glass substrate coated with a blocking layer comprising a material having Si-O-Si bonds and a blocking component, wherein the blocking component is a material that is capable of blocking electromagnetic radiation in the wavelength range 10-500 nm,
wherein said polyol comprises one or more of polyether polyols such as polyoxyalkylene triols e.g. polyoxypropylene triol; glycerol, sorbitol, mannitol, maltitol, lactitol, xylitol, isomalt, erythritol, polyvinyl alcohol; and cyclitols such as bornesitol, conduritol, inositol, ononitol, pinitol, pinpollitol, quebrachitol, quinic acid, shikimic acid, valienol, viscumitol and ciceritol,
wherein said diol comprises one or more of ethylene glycol, diethylene glycol, 1,2-ethanediol, propane-1,2-diol, propane-1,3-diol, 2-methyl-2-propyl-1,3-propanediol, neopentyl glycol, 1,4-butanediol, bisphenol A, propylene-1,3-diol, beta propylene glycol, resorcinol, methanediol, cyclohexanediol and 1,5-pentanediol.

## Patentansprüche

1. Beschichtetes Glassubstrat, umfassend:
ein transparentes Glassubstrat, beschichtet mit
einer Blockierschicht, die ein Material mit Si-O-Si-Bindungen, ein Polyol und/oder Diol und eine Blockierkomponente umfasst,
wobei die Blockierkomponente ein Material ist, das imstande ist, elektromagnetische Strahlung im Wellenlängenbereich von 10 bis 500 nm zu blockieren,
wobei das transparente Glassubstrat ein Glasbehälter ist und wobei die Blockierschicht auf der Außenfläche des Behälters angeordnet ist,
wobei das Polyol eines oder mehrere von Polyetherpolyolen wie Polyoxyalkylentriolen, z. B. Polyoxypropylentriol; Glycerin, Sorbit, Mannit, Maltit, Lactit, Xylit, Isomalt, Erythrit, Polyvinylalkohol; und Cyclitolen wie Bornesitol, Conduritol, Inosit, Ononit, Pinitol, Pinpollitol, Quebrachitol, Chinasäure, Shikimisäure, Valienol, Viscumitol und Ciceritol umfasst,
wobei das Diol eines oder mehrere von Ethylenglykol, Diethylenglykol, 1,2-Ethandiol, Propan-1,2-diol, Propan-1,3-diol, 2-Methyl-2-propyl-1,3-propandiol, Neopentylglykol, 1,4-Butandiol, Bisphenol A, Propylen-1,3-diol, Beta-Propylenglykol, Resorcin, Methandiol, Cyclohexandiol und 1,5-Pentandiol umfasst.

2. Beschichtetes Glassubstrat nach Anspruch 1, bei dem das Material mit Si-O-Si-Bindungen ein Material mit einem vernetzten Netzwerk aus Si-O-Si-Bindungen umfasst, wobei das Material mit Si-O-Si-Bindungen vorzugsweise ferner eine oder mehrere organische funktionelle Gruppen umfasst.

3. Beschichtetes Glassubstrat nach einem der vorhergehenden Ansprüche, bei dem die Blockierkomponente ein Material ist, das imstande ist, elektromagnetische Strahlung im Wellenlängenbereich von 200 bis 500 nm, vorzugsweise 250 bis 500 nm, stärker bevorzugt 300 bis 500 nm, noch stärker bevorzugt 350 bis 500 nm und am stärksten bevorzugt 380 bis 500 nm, zu blockieren.

4. Beschichtetes Glassubstrat nach einem der vorhergehenden Ansprüche, bei dem die Blockierkomponente eine oder mehrere aus einer Benzotriazolverbindung, einer Benzophenonverbindung, einer Hydroxyphenyltriazinverbindung und einer Cyanoacrylatverbindung umfasst.

5. Beschichtetes Glassubstrat nach einem der vorhergehenden Ansprüche, bei dem das beschichtete Glassubstrat umfasst:
ein transparentes Glassubstrat, beschichtet mit
einer Blockierschicht, die ein Material mit Si-O-Si-Bindungen, ein Polyol und/oder Diol und eine Blockierkomponente umfasst,
wobei die Blockierkomponente ein Material ist, das imstande ist, elektromagnetische Strahlung im Wellenlängenbereich von 10 bis 500 nm zu blockieren,
wobei das transparente Glassubstrat ein Glasbehälter ist,
wobei die Blockierschicht mindestens 80 % der Außenfläche des Behälters bedeckt,
wobei das Material mit Si-O-Si-Bindungen ein Material mit einem vernetzten Netzwerk aus Si-O-Si-Bindungen umfasst,
wobei die Blockierkomponente ein Material ist, das imstande ist, elektromagnetische Strahlung im Wellenlängenbereich von 350 bis 500 nm zu blockieren.

6. Verfahren zur Herstellung eines beschichteten Glassubstrats nach einem der vorhergehenden Ansprüche, wobei das Verfahren die folgenden Schritte umfasst:
a) Herstellen einer Lösung oder Mischung durch Mischen von mindestens den folgenden Komponenten: einem Silan, einem Polyol und/oder Diol, einer Blockierkomponente, Wasser und einer Säure;
b) Aufbringen der Lösung oder Mischung auf eine Oberfläche eines transparenten Glassubstrats; und
c) Aushärten der aufgebrachten Lösung oder Mischung,
wobei das Polyol eines oder mehrere von Polyetherpolyolen wie Polyoxyalkylentriolen, z. B. Polyoxypropylentriol; Glycerin, Sorbit, Mannit, Maltit, Lactit, Xylit, Isomalt, Erythrit, Polyvinylalkohol; und Cyclitolen wie Bornesitol, Conduritol, Inosit, Ononit, Pinitol, Pinpollitol, Quebrachitol, Chinasäure, Shikimisäure, Valienol, Viscumitol und Ciceritol umfasst,
wobei das Diol eines oder mehrere von Ethylenglykol, Diethylenglykol, 1,2-Ethandiol, Propan-1,2-diol, Propan-1,3-diol, 2-Methyl-2-propyl-1,3-propandiol, Neopentylglykol, 1,4-Butandiol, Bisphenol A, Propylen-1,3-diol, beta-Propylenglykol, Resorcin, Methandiol, Cyclohexandiol und 1,5-Pentandiol umfasst,
wobei die in Schritt a) hergestellte Lösung oder Mischung einen molaren Prozentsatz (mol%) des Polyols und/oder Diols von mindestens 2 mol% aufweist,
wobei die in Schritt a) hergestellte Lösung oder Mischung einen molaren Prozentsatz (mol%) des Silans von mindestens 1 mol%, aber höchstens 10 mol% aufweist, und
wobei die in Schritt a) hergestellte Lösung oder Mischung einen molaren Prozentsatz (mol%) von Wasser von mindestens 50 mol% aufweist.

7. Verfahren nach Anspruch 6, bei dem in Schritt a) nach dem Mischen die Lösung oder Mischung mindestens 2 Stunden, stärker bevorzugt mindestens 7 Stunden, noch stärker bevorzugt mindestens 10 Stunden, am stärksten bevorzugt mindestens 12 Stunden altern gelassen wird.

8. Verfahren nach Anspruch 6 oder 7, bei dem in Schritt b), wenn die Lösung oder Mischung auf die Oberfläche des transparenten Glassubstrats aufgebracht wird, das transparente Glassubstrat eine Temperatur von mehr als 60 °C, vorzugsweise mehr als 80 °C, stärker bevorzugt mehr als 100 °C, am stärksten bevorzugt mehr als 110 °C, aber vorzugsweise weniger als 200 °C, stärker bevorzugt weniger als 160 °C, noch stärker bevorzugt weniger als 140 °C, am stärksten bevorzugt weniger als 130 °C, aufweist.

9. Verfahren nach einem der Ansprüche 6 bis 8, bei dem in Schritt c) die aufgetragene Lösung oder Mischung mindestens 20 min, vorzugsweise mindestens 40 min, stärker bevorzugt mindestens 50 min, am stärksten bevorzugt mindestens 55 min, aber vorzugsweise höchstens 24 h, stärker bevorzugt höchstens 10 h, noch bevorzugter höchstens 3 Stunden, am meisten bevorzugt höchstens 1,5 Stunden lang ausgehärtet wird.

10. Verfahren nach einem der Ansprüche 6 bis 9, bei dem in Schritt c) die aufgetragene Lösung oder Mischung bei einer Temperatur von mehr als 20 °C, vorzugsweise mehr als 100 °C, stärker bevorzugt mehr als 160 °C, am meisten bevorzugt mehr als 190 °C, aber bevorzugt weniger als 400 °C, bevorzugter weniger als 300 °C, noch bevorzugter weniger als 240 °C, am meisten bevorzugt weniger als 210 °C ausgehärtet wird.

11. Verfahren nach einem der Ansprüche 6 bis 10, bei dem das Silan durch die Formel (1) dargestellt wird:
SiX₄ (1)
wobei X eine hydrolysierbare funktionelle Gruppe oder ein Halogenatom ist, und/oder wobei das Silan ein Tetraalkoxysilan wie Tetraethoxysilan (TEOS) ist.

12. Verfahren nach einem der Ansprüche 6 bis 11, bei dem die in Schritt a) gemischten Komponenten ferner einen Haftvermittler auf Silanbasis umfassen, der durch die Formel (2) dargestellt wird:
R¹ₘR²ₙSiX₄₋ₘ₋ₙ (2)
wobei R¹ eine organische Gruppe mit einer reaktiven funktionellen Gruppe ist, R² eine organische Gruppe ohne reaktive funktionelle Gruppe ist, X eine hydrolysierbare funktionelle Gruppe oder ein Halogenatom ist, m eine ganze Zahl von 1 bis 3 ist, n eine ganze Zahl von 0 bis 2 ist und m+n eine ganze Zahl von 1 bis 3 ist, wobei der Silan-Haftvermittler optional eines oder mehrere von Vinyltriethoxysilan, p-Styryltrimethoxysilan, 3-Glycidoxypropyltrimethoxysilan (GPTMS), 3-Glycidoxypropylmethyldiethoxysilan, 3-Methacryloxypropyltrimethoxysilan, 3-Aminopropyltrimethoxysilan, 3-Aminopropyltriethoxysilan, N-Phenyl-3-aminopropyltrimethoxysilan, Tris-(trimethoxysilylpropyl)isocyanurat, 3-Ureidopropyltrimethoxysilan, 3-Mercaptopropyltrimethoxysilan und Derivaten ist.

13. Verfahren nach einem der Ansprüche 6 bis 12, bei dem die in Schritt a) hergestellte Lösung oder Mischung einen molaren Prozentsatz (mol%) des Polyols und/oder Diols von mindestens 4 mol%, bevorzugter mindestens 5 mol%, am bevorzugtesten mindestens 6 mol%, aber vorzugsweise höchstens 20 mol%, bevorzugter höchstens 15 mol%, noch bevorzugter höchstens 10 mol%, am bevorzugtesten höchstens 7 mol% aufweist.

14. Verfahren nach einem der Ansprüche 6 bis 13, bei dem in Schritt a) nach dem Mischen die Lösung oder das Gemisch mindestens 2 h lang altern gelassen wird;
wobei in Schritt b), wenn die Lösung oder das Gemisch auf die Oberfläche des transparenten Glassubstrats aufgebracht wird, das transparente Glassubstrat eine Temperatur von mehr als 60 °C aufweist;
wobei das Silan ein Tetraalkoxysilan ist;
wobei die in Schritt a) gemischten Komponenten ferner einen Silan-Haftvermittler umfassen, der durch die Formel (2) dargestellt wird:
R¹ₘR²ₙSiX₄₋ₘ₋ₙ (2)
wobei R¹ eine organische Gruppe mit einer reaktiven funktionellen Gruppe ist, R² eine organische Gruppe ohne reaktive funktionelle Gruppe ist, X eine hydrolysierbare funktionelle Gruppe oder ein Halogenatom ist, m eine ganze Zahl von 1 bis 3 ist, n eine ganze Zahl von 0 bis 2 ist und m+n eine ganze Zahl von 1 bis 3 ist;
wobei die Blockierkomponente eine oder mehrere von einer Benzotriazolverbindung, einer Benzophenonverbindung, einer Hydroxyphenyltriazinverbindung und einer Cyanoacrylatverbindung umfasst; und
wobei die in Schritt a) hergestellte Lösung oder Mischung einen molaren Prozentsatz (mol%) des Polyols und/oder Diols, vorzugsweise Glycerin, von mindestens 4 mol%, vorzugsweise mindestens 6 mol%, aufweist.

15. Verwendung eines Polyols und/oder Diols zur Verbesserung der Feuchtigkeitsbeständigkeit eines beschichteten Glassubstrats, das ein mit einer Blockierschicht beschichtetes transparentes Glassubstrat umfasst, wobei die Blockierschicht ein Material mit Si-O-Si-Bindungen und eine Blockierkomponente umfasst, wobei die Blockierkomponente ein Material ist, das imstande ist, elektromagnetische Strahlung im Wellenlängenbereich von 10 bis 500 nm zu blockieren,
wobei das Polyol eines oder mehrere von Polyetherpolyolen wie Polyoxyalkylentriolen, z. B. Polyoxypropylentriol; Glycerin, Sorbit, Mannit, Maltit, Lactit, Xylit, Isomalt, Erythrit, Polyvinylalkohol; und Cyclitolen wie Bornesitol, Conduritol, Inosit, Ononit, Pinitol, Pinpollitol, Quebrachitol, Chinasäure, Shikimisäure, Valienol, Viscumitol und Ciceritol umfasst,
wobei das Diol eines oder mehrere von Ethylenglykol, Diethylenglykol, 1,2-Ethandiol, Propan-1,2-diol, Propan-1,3-diol, 2-Methyl-2-propyl-1,3-propandiol, Neopentylglykol, 1,4-Butandiol, Bisphenol A, Propylen-1,3-diol, Beta-Propylenglykol, Resorcin, Methandiol, Cyclohexandiol und 1,5-Pentandiol umfasst.

## Revendications

1. Substrat en verre revêtu comprenant :
un substrat en verre transparent revêtu d'une couche de blocage comprenant un matériau ayant des liaisons Si-O-Si, un polyol et/ou diol, et un composant de blocage,
dans lequel le composant de blocage est un matériau qui est capable de bloquer les rayonnements électromagnétiques dans la gamme de longueurs d'onde allant de 10 à 500 nm,
dans lequel le substrat en verre transparent est un récipient en verre et dans lequel la couche de blocage est située sur la surface externe du récipient,
dans lequel ledit polyol comprend un ou plusieurs parmi les polyéther-polyols tels que les polyoxyalkylènetriols, par exemple le polyoxypropylènetriol ; le glycérol, le sorbitol, le mannitol, le maltitol, le lactitol, le xylitol, l'isomalt, l'érythritol, le poly(alcool vinylique) ; et les cyclitols tels que le bornésitol, le conduritol, l'inositol, l'ononitol, le pinitol, le pinpollitol, le québrachitol, l'acide quinique, l'acide shikimique, le valiénol, le viscumitol et le cicéritol,
dans lequel ledit diol comprend un ou plusieurs parmi l'éthylèneglycol, le diéthylèneglycol, le 1,2-éthanediol, le propane-1,2-diol, le propane-1,3-diol, le 2-méthyl-2-propyl-1,3-propanediol, le néopentylglycol, le 1,4-butanediol, le bisphénol A, le propylène-1,3-diol, le bêta-propylèneglycol, le résorcinol, le méthanediol, le cyclohexanediol et le 1,5-pentanediol.

2. Substrat en verre revêtu selon la revendication 1, dans lequel le matériau ayant des liaisons Si-O-Si comprend un matériau ayant un réseau réticulé de liaisons Si-O-Si, de préférence dans lequel le matériau ayant des liaisons Si-O-Si comprend en outre un ou plusieurs groupes fonctionnels organiques.

3. Substrat en verre revêtu selon l'une quelconque des revendications précédentes, dans lequel le composant de blocage est un matériau qui est capable de bloquer les rayonnements électromagnétiques dans la gamme de longueurs d'onde allant de 200 à 500 nm, de préférence de 250 à 500 nm, mieux encore de 300 à 500 nm, plus particulièrement de 350 à 500 nm, tout spécialement de 380 à 500 nm.

4. Substrat en verre revêtu selon l'une quelconque des revendications précédentes, dans lequel le composant de blocage comprend un ou plusieurs parmi un composé benzotriazole, un composé benzophénone, un composé hydroxyphényltriazine, et un composé cyanoacrylate.

5. Substrat en verre revêtu selon l'une quelconque des revendications précédentes, lequel substrat en verre revêtu comprend :
un substrat en verre transparent revêtu d'une couche de blocage comprenant un matériau ayant des liaisons Si-O-Si, un polyol et/ou diol, et un composant de blocage,
dans lequel le composant de blocage est un matériau qui est capable de bloquer les rayonnements électromagnétiques dans la gamme de longueurs d'onde allant de 10 à 500 nm,
dans lequel le substrat en verre transparent est un récipient en verre,
dans lequel la couche de blocage revêt au moins 80 % de la surface externe du récipient,
dans lequel le matériau ayant des liaisons Si-O-Si comprend un matériau ayant un réseau réticulé de liaisons Si-O-Si,
dans lequel le composant de blocage est un matériau qui est capable de bloquer les rayonnements électromagnétiques dans la gamme de longueurs d'onde allant de 350 à 500 nm.

6. Procédé pour préparer un substrat en verre revêtu selon l'une quelconque des revendications précédentes, ledit procédé comprenant les étapes suivantes :
a) préparation d'une solution ou d'un mélange par mélange au moins des composants suivants : un silane, un polyol et/ou diol, un composant de blocage, de l'eau, et un acide ;
b) application de ladite solution ou dudit mélange sur une surface d'un substrat en verre transparent ; et
c) durcissement de la solution ou du mélange appliqué,
dans lequel ledit polyol comprend un ou plusieurs parmi les polyéther-polyols tels que les polyoxyalkylènetriols, par exemple le polyoxypropylènetriol ; le glycérol, le sorbitol, le mannitol, le maltitol, le lactitol, le xylitol, l'isomalt, l'érythritol, le poly(alcool vinylique) ; et les cyclitols tels que le bornésitol, le conduritol, l'inositol, l'ononitol, le pinitol, le pinpollitol, le québrachitol, l'acide quinique, l'acide shikimique, le valiénol, le viscumitol et le cicéritol,
dans lequel ledit diol comprend un ou plusieurs parmi l'éthylèneglycol, le diéthylèneglycol, le 1,2-éthanediol, le propane-1,2-diol, le propane-1,3-diol, le 2-méthyl-2-propyl-1,3-propanediol, le néopentylglycol, le 1,4-butanediol, le bisphénol A, le propylène-1,3-diol, le bêta-propylèneglycol, le résorcinol, le méthanediol, le cyclohexanediol et le 1,5-pentanediol,
dans lequel la solution ou le mélange préparé dans l'étape a) a un pourcentage molaire (% en moles) du polyol et/ou diol d'au moins 2 % en moles,
dans lequel la solution ou le mélange préparé dans l'étape a) a un pourcentage molaire (% en moles) du silane d'au moins 1 % en moles mais d'au plus 10 % en moles, et
dans lequel la solution ou le mélange préparé dans l'étape a) a un pourcentage molaire (% en moles) de l'eau d'au moins 50 % en moles.

7. Procédé selon la revendication 6, dans lequel, dans l'étape a) après le mélange, la solution ou le mélange est vieilli pendant au moins 2 heures, mieux encore au moins 7 heures, plus particulièrement au moins 10 heures, tout spécialement au moins 12 heures.

8. Procédé selon la revendication 6 ou la revendication 7, dans lequel, dans l'étape b), quand la solution ou le mélange est appliqué sur la surface du substrat en verre transparent, ledit substrat en verre transparent est à une température supérieure à 60°C, de préférence supérieure à 80°C, mieux encore supérieure à 100°C, tout spécialement supérieure à 110°C, mais de préférence inférieure à 200°C, mieux encore inférieure à 160°C, plus particulièrement inférieure à 140°C, tout spécialement inférieure à 130°C.

9. Procédé selon l'une quelconque des revendications 6 à 8, dans lequel, dans l'étape c), la solution ou le mélange appliqué est durci pendant au moins 20 minutes, de préférence au moins 40 minutes, mieux encore au moins 50 minutes, tout spécialement au moins 55 minutes, mais de préférence au plus 24 heures, mieux encore au plus 10 heures, plus particulièrement au plus 3 heures, tout spécialement au plus 1,5 heures.

10. Procédé selon l'une quelconque des revendications 6 à 9, dans lequel, dans l'étape c), la solution ou le mélange appliqué est durci à une température supérieure à 20°C, de préférence supérieure à 100°C, mieux encore supérieure à 160°C, tout spécialement supérieure à 190°C, mais de préférence inférieure à 400°C, mieux encore inférieure à 300°C, plus particulièrement inférieure à 240°C, tout spécialement inférieure à 210°C.

11. Procédé selon l'une quelconque des revendications 6 à 10, dans lequel le silane est représenté par la formule (1) :
SiX₄ (1)
dans laquelle X est un groupe fonctionnel hydrolysable ou un atome d'halogène, et/ou dans lequel le silane est un tétraalcoxysilane tel que le tétraéthoxysilane (TEOS).

12. Procédé selon l'une quelconque des revendications 6 à 11, dans lequel les composants mélangés dans l'étape a) comprennent en outre un agent de couplage de type silane représenté par la formule (2) :
R¹ₘR²ₙSiX₄₋ₘ₋ₙ (2)
dans laquelle R¹ est un groupe organique ayant un groupe fonctionnel réactif, R² est un groupe organique n'ayant pas de groupe fonctionnel réactif, X est un groupe fonctionnel hydrolysable ou un atome d'halogène, m est un entier de 1 à 3, n est un entier de 0 à 2, et m+n est un entier de 1 à 3, éventuellement dans lequel l'agent de couplage de type silane comprend un ou plusieurs parmi le vinyltriéthoxysilane, le p-styryltriméthoxysilane, le 3-glycidoxypropyltriméthoxysilane (GPTMS), le 3-glycidoxypropylméthyldiéthoxysilane, le 3-méthacryloxypropyltriméthoxy-silane, le 3-aminopropyltriméthoxysilane, le 3-aminopropyltriéthoxysilane, le N-phényl-3-aminopropyltriméthoxysilane, l'isocyanurate de tris-(triméthoxysilylpropyle), le 3-uréidopropyltriméthoxysilane, le 3-mercaptopropyltriméthoxysilane, et leurs dérivés.

13. Procédé selon l'une quelconque des revendications 6 à 12, dans lequel la solution ou le mélange préparé dans l'étape a) a un pourcentage molaire (% en moles) du polyol et/ou diol d'au moins 4 % en moles, mieux encore d'au moins 5 % en moles, tout spécialement d'au moins 6 % en moles, mais de préférence d'au plus 20 % en moles, mieux encore d'au plus 15 % en moles, plus particulièrement d'au plus 10 % en moles, tout spécialement d'au plus 7 % en moles.

14. Procédé selon l'une quelconque des revendications 6 à 13, dans lequel, dans l'étape a) après le mélange, la solution ou le mélange est vieilli pendant au moins 2 heures ;
dans lequel, dans l'étape b), quand la solution ou le mélange est appliqué sur la surface du substrat en verre transparent, ledit substrat en verre transparent est à une température supérieure à 60°C ;
dans lequel le silane est un tétraalcoxysilane ;
dans lequel les composants mélangés dans l'étape a) comprennent en outre un agent de couplage de type silane représenté par la formule (2) :
R¹ₘR²ₙSiX₄₋ₘ₋ₙ (2)
dans laquelle R¹ est un groupe organique ayant un groupe fonctionnel réactif, R² est un groupe organique n'ayant pas de groupe fonctionnel réactif, X est un groupe fonctionnel hydrolysable ou un atome d'halogène, m est un entier de 1 à 3, n est un entier de 0 à 2, et m+n est un entier de 1 à 3 ;
dans lequel le composant de blocage comprend un ou plusieurs parmi un composé benzotriazole, un composé benzophénone, un composé hydroxyphényltriazine, et un composé cyanoacrylate ; et
dans lequel la solution ou le mélange préparé dans l'étape a) a un pourcentage molaire (% en moles) du polyol et/ou diol, de préférence du glycérol, d'au moins 4 % en moles, de préférence d'au moins 6 % en moles.

15. Utilisation d'un polyol et/ou diol pour améliorer la durabilité à l'humidité d'un substrat en verre revêtu comprenant un substrat en verre transparent revêtu d'une couche de blocage comprenant un matériau ayant des liaisons Si-O-Si et un composant de blocage, dans laquelle le composant de blocage est un matériau qui est capable de bloquer les rayonnements électromagnétiques dans la gamme de longueurs d'onde allant de 10 à 500 nm,
dans laquelle ledit polyol comprend un ou plusieurs parmi les polyéther-polyols tels que les polyoxyalkylènetriols, par exemple le polyoxypropylènetriol ; le glycérol, le sorbitol, le mannitol, le maltitol, le lactitol, le xylitol, l'isomalt, l'érythritol, le poly(alcool vinylique) ; et les cyclitols tels que le bornésitol, le conduritol, l'inositol, l'ononitol, le pinitol, le pinpollitol, le québrachitol, l'acide quinique, l'acide shikimique, le valiénol, le viscumitol et le cicéritol,
dans laquelle ledit diol comprend un ou plusieurs parmi l'éthylèneglycol, le diéthylèneglycol, le 1,2-éthanediol, le propane-1,2-diol, le propane-1,3-diol, le 2-méthyl-2-propyl-1,3-propanediol, le néopentylglycol, le 1,4-butanediol, le bisphénol A, le propylène-1,3-diol, le bêta-propylèneglycol, le résorcinol, le méthanediol, le cyclohexanediol et le 1,5-pentanediol.
